# FASCICULE DE BREVET EUROPEEN

(11) **EP 1 796 871 B1**
(45) Date de publication et mention de la délivrance du brevet: **20.08.2008**
(21) Numéro de dépôt: 05756137.5
(22) Date de dépôt: 12.07.2005
(51) Int. Cl.: B23Q 3/00, B23Q 16/00, B23B 27/04

(54) **DISPOSITIF DE SERRAGE D'UNE PLAQUETTE D 'OUTIL DANS UNE MACHINE D'AFFUTAGE**
VORRICHTUNG ZUM EINSPANNEN EINES WERKZEUGEINSATZES IN EINE SCHLEIFMASCHINE
DEVICE FOR CLAMPING A TOOL INSERT IN A GRINDING MACHINE

(30) Priorité: 30.07.2004 EP 04405487
(43) Date de publication de la demande: 20.06.2007
(73) Titulaire: Rollomatic S.A., 2525 Le Landeron (CH)
(72) Inventeur: TSCHAMPION, Pierre, CH-2520 La Neuveville (CH)
(74) Mandataire: Ganguillet, Cyril
(86) Numéro de dépôt international: PCT/CH2005/000396
(87) Numéro de publication internationale: WO 2006/010281

(56) Documents cités:
- EP-A- 0 183 907
- US-B1- 6 176 649
- US-B1- 6 250 854

## Description

La présente invention a pour objet un dispositif de serrage d'une plaquette d'outil dans une machine de meulage, notamment pour son affûtage, conformément an préamble de la revendication 1 (voir, pan example, US - 6176 649-B).

On sait que les centres d'usinage effectuant des opérations de tournage, fraisage, perçage, alésage ou autre utilisent entre autres des outils composés d'un corps en acier à haute résistance sur lequel est fixée une plaquette ou insert qui présente une ou plusieurs arêtes de coupe. Ces plaquettes, en matériaux de très haute dureté et résistance, comme le carbure de tungstène (CW) ou de titane, les cermets, etc., doivent présenter des arêtes de coupe taillées avec précision et affûtées dans des tolérances serrées par meulage et rectifiage afin que leur utilisation sur les machines d'usinage à commande numérique permette de garantir le résultat des usinages programmés.

Afin d'obtenir la précision souhaitée, il est nécessaire que, pendant l'opération de meulage d'affûtage, la plaquette soit positionnée de façon très précise et maintenue fermement. A cet effet, les plaquettes présentent, de fabrication, un alésage qui les traverse de part en part et forme un repère dimensionnel, complété par une face-talon opposée à l'arête de coupe.

Le but de la présente invention est de créer un dispositif de serrage qui positionne et fixe une plaquette de manière fiable et rigoureuse par rapport à un système d'axes lié à la machine de meulage, de sorte que les opérations de meulage et d'affûtage de la ou des arêtes de coupe peuvent être dirigées par commande numérique et donc être effectuées à très grande vitesse. En outre l'invention vise à permettre des mises en place et extractions automatisées de plaquettes aussi faciles que possible.

A cet effet, la présente invention concerne un dispositif de serrage d'une plaquette d'outil tel que défini à la revendication 1.

L'appui interchangeable peut être une pièce rapportée, fixée au corps et dimensionnée de manière que les surfaces de réception positionnent la plaquette de manière précise par rapport à l'axe du piston.

Le bec de blocage du levier de serrage peut être conformé pour s'engager dans une forure alésée de la plaquette et agir sur le flanc de cette forure.

L'appui interchangeable peut posséder deux surfaces de réception pour la plaquette, orientées perpendiculairement l'une à l'autre, l'une d'elles étant perpendiculaire à l'axe du piston.

Le sabot d'appui peut être une pièce indépendante montée sur le levier de serrage au moyen d'une goupille permettant un pivotement du sabot qui amène un bord de ce dernier en appui contre une surface d'appui du levier au moment où une surface de butée du sabot bute contre une surface d'appui de la plaquette.

Le pivotement du levier de serrage dans une fente du corps peut être réalisé par une goupille cylindrique engagée dans un trou oblong des joues du corps, de manière à permettre un déplacement combiné de rotation et de translation du levier de serrage par rapport au corps.

La came peut être fixée à l'extrémité du piston de la poupée et comporte un profil avec une encoche prolongée de chaque côté par une rampe, ces éléments de profil coopérant avec une tête arrière du levier.

Un dispositif de mesure comportant un capteur de position peut être associé au corps du dispositif, de manière à s'engager dans un alésage de la plaquette maintenue serrée par le levier, afin de détecter sa position exacte et commander les opérations de meulage, la ou les arêtes de coupe des plaquettes étant repérées par rapport au dit alésage.

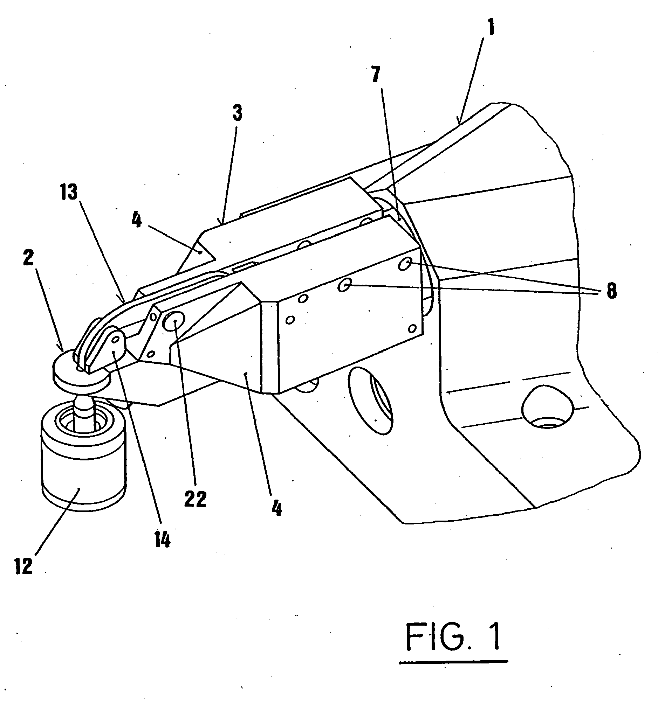

On décrit ci-après, à titre d'exemple, une forme d'exécution de l'objet de l'invention, représentée sur les dessins annexés, dont
- la fig. 1 est une vue, en perspective latérale et de dessus, du dispositif de serrage,
- la fig. 2 une vue en coupe de ce dispositif selon un plan vertical passant par l'axe de la poupée, à échelle agrandie, et
- la fig. 3 une vue en coupe semblable à celle de la fig. 2, montrant le dispositif en position de serrage sur une plaquette.

Tel que représenté sur les dessins, le dispositif est monté sur une poupée porte-pièce 1 d'une machine de meulage dont les outils sont commandés de manière à pouvoir attaquer les parties à meuler d'une ébauche de plaquette 2 par exemple en forme de disque semi-circulaire.

La partie principale du dispositif est un corps 3 ayant une forme générale de parallélépipède rectangle avec une extrémité à faces pyramidales 4 à sa partie antérieure. Cette pièce présente dans toute sa longueur une fente 5 selon un plan vertical dans son axe de symétrie, débouchant dans un alésage 6 qui permet l'engagement du canon cylindrique 7 de la poupée 1. La fixation du corps 3 sur le canon 7 est obtenue par des vis 8 engagées dans des trous correspondants qui traversent les deux joues du corps 3 séparées par la fente 5.

Sous le corps 3 est fixé un appui interchangeable 9 adapté aux dimensions des plaquettes 2 à usiner. Cette pièce présente deux faces de réception de plaquettes 10 et 11 dont la disposition exacte sera expliquée plus loin et est agencée pour coopérer avec un palpeur de position 20 actionné par un dispositif de mesure 12, par exemple du type Renishaw, pour repérer la position exacte de la plaquette serrée dans le dispositif et commander le meulage.

Quand une plaquette 2 a été posée sur la surface de réception 10 de l'appui 9, son serrage est réalisé au moyen d'un levier de serrage 13, muni d'un sabot d'appui 14 en forme de U et dont les joues sont engagées de part et d'autre de la partie antérieure en forme de bec 15 du levier 13.

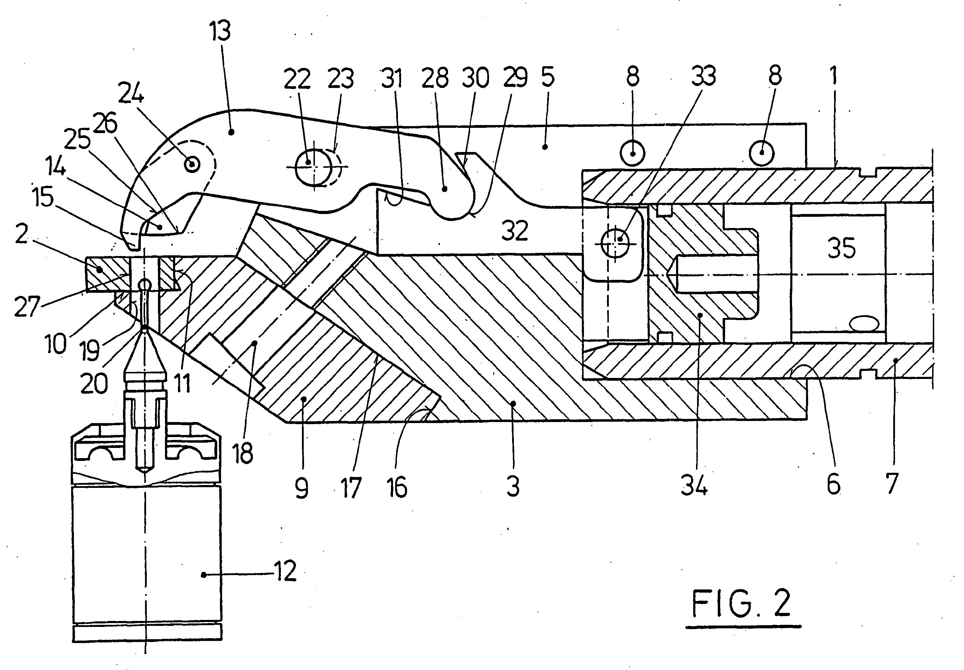

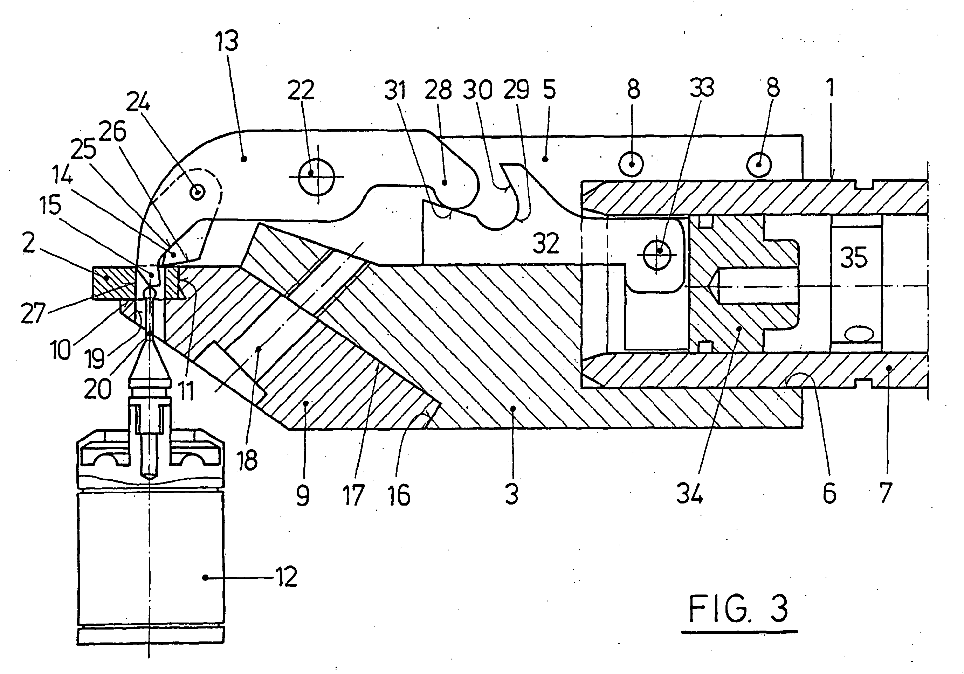

Les fig. 2 et 3 montrent l'agencement de l'appui interchangeable 9 et la commande du levier de serrage 13. En fait le dispositif comportera un jeu d'appuis interchangeables 9 ajustés aux dimensions de différentes plaquettes. En effet les plaquettes à usiner, affûter ou tailler peuvent être de dimensions variables, par exemple avec un diamètre de 6 à 32 mm et une épaisseur de 2 à 8 mm. Or pour que les usinages s'effectuent régulièrement, il est nécessaire que le plan médian de la plaquette soit positionné dans le prolongement de l'axe de la poupée 1. Il est donc nécessaire que les appuis interchangeables 9 constituent un dispositif de positionnement précis. A cet effet, ils peuvent par exemple présenter un talon 16 et une face d'appui 17 qui correspondent à des faces antagonistes du corps 3 et sont disposés en fonction d'un modèle de plaquette déterminé. Une vis 18 engagée dans un alésage de l'appui 9 et dans un taraudage du corps 3 fixe l'appui de manière que les faces 16 et 17 soient pressées contre les surfaces de réception du corps 3. Dans ce but, l'axe de l'alésage et du taraudage recevant la vis 18 est légèrement oblique par rapport au talon 16, lui-même perpendiculaire à la face d'appui 17. Chaque appui interchangeable présente un alésage 19 pour l'engagement du palpeur de position 20, cet alésage débouchant dans la face d'appui 10 qui, avec la face-talon 11 perpendiculaire à l'axe de la poupée précise le positionnement de la plaquette. L'alésage 19 est situé au droit d'un alésage 27 de la plaquette qui représente sa référence de positionnement. Les deux surfaces 10 et 11 sont ajustées en fonction des dimensions de la plaquette, le talon étant perpendiculaire à l'axe de la poupée 3 et la face 10 perpendiculaire au plan de symétrie du dispositif, donc parallèle à l'axe de la poupée.

Le montage et la commande du levier de serrage 13 résultent des fig. 2 et 3. Ce levier est engagé et guidé dans la fente 5, et son axe 22 logé dans des trous oblongs 23 des joues du corps 3. A son extrémité antérieure le levier présente un bec 15 conformé de manière à pouvoir s'engager jusqu'à mi-profondeur dans l'alésage 27 de l'ébauche de plaquette 2. En outre le sabot d'appui 14, en forme de U et maintenu sur le levier 13 par une goupille 24, est agencé avec une face de pression 25 et une face d'appui 26 qui, en position active (fig. 3), transmettent une force de serrage suffisante sur la plaquette pour fixer celle-ci et permettre les opérations de meulage. On notera que la géométrie de ces éléments est agencée de telle façon que la goupille 24 ne subisse en principe aucune sollicitation.

A son extrémité arrière le levier 13 présente une tête 28 qui coopère avec un profil déterminé d'une came 32 engagée dans la fente 5 du corps 3. Ce profil comporte deux rampes 30 et 31 et entre elles une encoche 29 ajustée à la tête 28 du levier 13. La came 32 est fixée par une vis 33 dans une fente diamétrale verticale d'un embout 34 fixé à l'extrémité du piston 35 d'un vérin agissant à l'intérieur du canon 7 de la poupée 1.

On comprend que la fig. 2 illustre la position de dégagement. Le piston 35 est en position avancée. La came 32 maintient, au moyen de la rampe 30, le levier 13 dans une position dans laquelle le bec 15 est dégagé de l'appui 9. Une plaquette 2 peut être mise en place sur l'appui ou relevée de ce dernier.

En revanche la fig. 3 illustre la position atteinte quand le piston 35 a été retiré. L'embout 34 a déplacé la came 32 parallèlement à elle-même, de sorte que la tête 28 du levier 13 a été soulevée par la rampe 31. Le bec 15 s'est engagé dans l'alésage 27 en pressant la plaquette 2 contre le talon 11 tandis que le sabot 14, pressé par la face 25 du levier et appuyant par sa face 26 sur la plaquette, presse celle-ci fermement sur la face 10 de l'appui interchangeable. Les trous oblongs 23 permettent un mouvement combiné de translation et de pivotement pour le levier 13. En outre la pente de la rampe 31 de la came assure une multiplication de la force verticale exercée par le sabot 14 par rapport à la force de déplacement du piston 35. On peut obtenir des taux de multiplication des efforts de 2 à 5, de sorte que le domaine d'utilisation du dispositif est extrêmement large.

Ainsi, un simple et unique déplacement du piston 35 permet d'obtenir une action combinée à trois effets :
- introduction du bec 15 du levier de serrage dans l'alésage 27 de la plaquette,
- éventuel déplacement de la plaquette vers l'arrière sous l'effet du bec 15 et appui de la plaquette contre la face-talon 11 de l'appui interchangeable,
- effet de pression de la plaquette contre la face 10 de l'appui interchangeable par l'intermédiaire du sabot 14.

## Revendications

1. Dispositif de serrage d'une plaquette d'outil dans une machine de meulage, notamment pour son affûtage, comprenant un corps (3) destiné à être monté sur une poupée (1) de la machine et un levier de serrage (13) pivotant dans le corps (3), ledit levier de serrage étant muni d'un bec de blocage (15) et d'un sabot d'appui (14), ces éléments étant amenés en appui sur la plaquette (2) par déplacement du levier de serrage (13), **caractérisé** pan le fait que le comprest muni d'un appui interchangeable (9) qui présente des surfaces de réception (10, 11) pour la plaquette (2) et que le lervies de serage pivote dem une fente (5) du corps sous l'effet du déplacement d'un piston (35) logé dans la poupée (1) et commandant le levier par l'intermédiaire d'une came (32).

2. Dispositif selon la revendication 1, **caractérisé en ce que** l'appui interchangeable (9) est une pièce rapportée, fixée au corps (3) et dimensionnée de manière que les surfaces de réception (10, 11) positionnent la plaquette (2) de manière précise par rapport à l'axe du piston (35).

3. Dispositif selon la revendication 1, **caractérisé en ce que** le bec de blocage (15) du levier de serrage (13) est conformé pour s'engager dans une forure alésée (27) de la plaquette (2) et agir sur le flanc de cette forure.

4. Dispositif selon la revendication 3, **caractérisé en ce que** l'appui interchangeable (9) possède deux surfaces de réception (10, 11) pour la plaquette, orientées perpendiculairement l'une à l'autre, l'une d'elles étant perpendiculaire à l'axe du piston (35).

5. Dispositif selon la revendication 3, **caractérisé en ce que** le sabot d'appui (14) est une pièce indépendante montée sur le levier de serrage (13) au moyen d'une goupille (24) permettant un pivotement du sabot qui amène un bord de ce dernier en appui contre une surface d'appui (25) du levier au moment où une surface de butée (26) du sabot bute contre une surface d'appui de la plaquette.

6. Dispositif selon la revendication 3, **caractérisé en ce que** le pivotement du levier de serrage (13) dans une fente (5) du corps (3) est réalisé par une goupille cylindrique (22) engagée dans un trou oblong (23) des joues du corps (3), de manière à permettre un déplacement combiné de rotation et de translation du levier de serrage par rapport au corps (3).

7. Dispositif selon la revendication 1, **caractérisé en ce que** la dite came (32) est fixée à l'extrémité du piston (35) de la poupée (1) et comporte un profil avec une encoche (29) prolongée de chaque côté par une rampe (30, 31), ces éléments de profil coopérant avec une tête arrière (28) du levier (13).

8. Dispositif selon la revendication 1, **caractérisé en ce qu'**un dispositif de mesure (12) comportant un capteur de position (20) est associé au corps (3) du dispositif, de manière à s'engager dans un alésage (27) de la plaquette maintenue serrée par le levier (13), afin de détecter sa position exacte et commander les opérations de meulage, la ou les arêtes de coupe des plaquettes étant repérées par rapport au dit alésage (27).

## Claims

1. A device for clamping a tool insert in a grinding machine, in particular for sharpening it, comprising a body (3) intended to be mounted on a headstock (1) of the machine and a clamping lever (13) pivoting in the body (3), the said clamping lever being provided with a locking nose (15) and a support shoe (14), these elements being brought into abutment on the insert (2) by moving the clamping lever (13), **characterised in that** said body is provided with an interchangeable support (9) which has reception surfaces (10, 11) for the insert (2) and **in that** said clamping lever pivotes in a slot (5) in the body, under the effect of the movement of a piston (35) housed in the headstock (1) and controlling the lever by means of a cam (32).

2. Device according to claim 1, **characterised in that** the interchangeable support (9) is an attached piece, fixed to the body (3) and sized so that the reception surfaces (10, 11) position the insert (2) precisely with respect to the axis of the piston (35).

3. Device according to claim 1, **characterised in that** the locking nose (15) of the clamping lever (13) is conformed so as to engage in a bored hole (27) in the insert (2) and act on the flank of this hole.

4. Device according to claim 3, **characterised in that** the interchangeable support (9) has two reception surfaces (10, 11) for the insert, oriented perpendicular to each other, one of them being perpendicular to the axis of the piston (35).

5. Device according to claim 3, **characterised in that** the support shoe (14) is an independent piece mounted on the clamping lever (13) by means of a pin (24) allowing a pivoting of the shoe which brings one edge of the latter into abutment against a support surface (25) of the lever when a stop surface (26) of the shoe abuts against a support surface of the insert.

6. Device according to claim 3, **characterised in that** the pivoting of the clamping lever (13) in a slot (5) in the body (3) is effected by a cylindrical pin (22) engaged in an oblong hole (23) in the cheeks of the body (3), so as to allow a combined rotation and translation movement of the clamping lever with respect to the body (3).

7. Device according to claim 1, **characterised in that** the said cam (32) is fixed at the end of the piston (35) of the headstock (1) and comprises a profile with a notch (29) extended on each side by a ramp (30, 31), these profile elements cooperating with a rear head (28) of the lever (13).

8. Device according to claim 1, **characterised in that** a measuring device (12) comprising a position sensor (20) is associated with the body (3) of the device, so as to engage in a bore (27) of the insert held clamped by the lever (13), in order to detect its exact position and control the grinding operations, the cutting edge or edges of the inserts being located with respect to the said bore (27).

## Patentansprüche

1. Vorrichtung zum Einspannen einer Werkzeugscheibe in eine Schleifmaschine, insbesondere für ihre Schleifung, umfassend einen Körper (3) der dazu bestimmt ist, auf einem Spindelstock (1) der Maschine montiert zu werden, und einen Spannhebel (13), der in dem Körper (3) schwenkbar ist, wobei dieser Spannhebel mit einer Klemmnase (15) und einem Auflageschuh (14) versehen ist, wobei diese Elemente durch Bewegung des Spannhebels (13) auf der Scheibe (2) zur Anlage gebracht werden, **dadurch gekennzeichnet, dass** der Körper mit einer auswechselbaren Auflage (9) versehen ist, welche Aufnahmeflächen (10, 11) für die Scheibe (2) aufweist, und dass der Spannhebel unter der Wirkung der Bewegung eines Kolbens (35), der in dem Spindelstock (1) angeordnet ist und den Hebel mittels eines Nockens (32) betätigt, in einem Schlitz (5) des Körpers schwenkt.

2. Vorrichtung nach Anspruch 1, **dadurch gekennzeichnet, dass** die auswechselbare Auflage (9) ein Ansatzstück ist, das an dem Körper (3) befestigt ist und so dimensioniert ist, dass die Aufnahmeflächen (10, 11) die Scheibe (2) in Bezug auf die Achse des Kolbens (35) genau positionieren.

3. Vorrichtung nach Anspruch 1, **dadurch gekennzeichnet, dass** die Klemmnase (15) des Spannhebels (13) dafür angepasst ist, in eine ausgebohrte Bohrung (27) der Scheibe (2) einzugreifen und auf die Flanke dieser Bohrung einzuwirken.

4. Vorrichtung nach Anspruch 3, **dadurch gekennzeichnet, dass** die auswechselbare Auflage (9) zwei Aufnahmeflächen (10, 11) für die Scheibe besitzt, die senkrecht zueinander ausgerichtet sind, wobei eine von ihnen senkrecht zur Achse des Kolbens (35) ist.

5. Vorrichtung nach Anspruch 3, **dadurch gekennzeichnet, dass** der Auflageschuh (14) ein eigenständiges Teil ist, das auf dem Spannhebel (13) montiert ist, und zwar mittels eines Zapfens (24), der ein Schwenken des Schuhs ermöglicht, das eine Kante dieses letzteren in dem Augenblick, wo eine Anschlagfläche (26) des Schuhs an eine Auflagefläche der Scheibe stößt, an einer Auflagefläche (25) des Hebels zur Anlage bringt.

6. Vorrichtung nach Anspruch 3, **dadurch gekennzeichnet, dass** das Schwenken des Spannhebels (13) in einem Schlitz (5) des Körpers (3) mittels eines zylindrischen Zapfens (22) erfolgt, der in ein Langloch (23) der Wangen des Körpers (3) eingreift, so dass eine kombinierte Dreh- und Translationsbewegung des Hebels in Bezug auf den Körper (3) ermöglicht wird.

7. Vorrichtung nach Anspruch 1, **dadurch gekennzeichnet, dass** der Nocken (32) am Ende des Kolbens (35) des Spindelstocks (1) befestigt ist und ein Profil mit einer Kerbe (29) aufweist, die auf jeder Seite von einer Rampe (30, 31) fortgesetzt wird, wobei diese Profilelemente mit einem rückwärtigen Kopf (28) des Hebels (13) zusammenwirken.

8. Vorrichtung nach Anspruch 1, **dadurch gekennzeichnet, dass** eine Messvorrichtung (12), die einen Positionsaufnehmer (20) umfasst, mit dem Körper (3) der Vorrichtung assoziiert ist, derart, dass sie in eine Bohrung (27) der von dem Hebel (13) geklemmt gehaltenen Scheibe eingreift, um deren genaue Position zu erfassen und die Arbeitsgänge des Schleifens zu steuern, wobei die Lage der Schneidkante(n) der Scheiben in Bezug auf diese Bohrung (27) ermittelt wird.
